# EUROPEAN PATENT APPLICATION

(11) **EP 4 227 837 A1**
(43) Date of publication of application: **16.08.2023**
(21) Application number: 21879726.4
(22) Date of filing: 04.08.2021
(51) Int. Cl.: G06F 21/62, G06F 16/176

(54) **DATA MANAGEMENT DEVICE, DATA SHARING SYSTEM AND METHOD, AND DATA MANAGEMENT PROGRAM**

(30) Priority: 12.10.2020 JP 2020171838
(71) Applicant: NTT Communications Corporation, Tokyo 100-8019 (JP)
(72) Inventor: TAKADA, Tomonori, Tokyo 100-8019 (JP); AKABORI, Hideaki, Tokyo 100-8019 (JP); KISHIDA, Tsunechika, Tokyo 100-8019 (JP); KOBAYASHI, Yoshihiko, Tokyo 100-8019 (JP); SUZUKI, Masataka, Tokyo 100-8019 (JP); MINAKUCHI, Tohru, Tokyo 100-8019 (JP)
(74) Representative: Gramm, Lins & Partner Patent- und Rechtsanwälte PartGmbB
(86) International application number: PCT/JP2021/028978
(87) International publication number: WO 2022/079984

(57) **Abstract**

According to one aspect of the present invention, a data management device creates a shared storage area accessible only by the first user and the second user. The data management device further generates a new data file as shared data of the first user and the second user by extracting, according to a shared use condition of data for the second user that is set by the first user, at least some data of at least one data file among one or more data files of the first user, said one or more data files being stored in a dedicated storage area isolated from the second user. Further, the data management device stores the generated shared data in the shared storage area.

## Description

### FIELD

Embodiments described herein relate generally to a data management device, a data sharing system and method, and a data management program.

### BACKGROUND

Several devices for sharing data among a plurality of user terminals have been proposed. For example, Patent Literature 1 discloses a device in which the same user data is stored in a plurality of user terminals, and when user data is updated in a user terminal of a certain user (updater), the user data is also updated in user terminals of other users.

### CITATION LIST

### PATENT LITERATURE

Patent Literature 1: Japanese Patent Application KOKAI Publication No. 2012-168630

### SUMMARY

### TECHNICAL PROBLEM

As for important data and confidential data, on the other hand, it is important that such data is not viewed by other users. In a case where data is stored in a plurality of user terminals as in Patent Literature 1, an application performs access control in accordance with an authority, and thus other users without authority do not view the data in a normal state. However, there is a possibility that data will be leaked to an unintended party at the time of application failure or system trouble.

Thus, it is desirable to divide and isolate data in a dedicated area, instead of allowing a plurality of users to store one piece of data or storing data of a plurality of users in a mixed manner. However, when data is isolated and stored in a dedicated area, it takes time and effort to disclose the data to other users. For example, it is necessary to temporarily copy the target data from the dedicated area to a user's own terminal such as a personal computer (hereinafter, abbreviated as PC) and send that data to another user by e-mail. Furthermore, there is a possibility of data leakage from the user's own terminal or mail server.

The present invention has been made in view of the above circumstances, and it is an object of the present invention to make it possible to share data among users while satisfying an isolation requirement that only users who use the data can access the data.

### SOLUTION TO PROBLEM

In order to solve the problem, a data management device according to one aspect of the present invention is a data management device for managing data sharing between a first user and a second user, the device including: an area management processing unit for creating a shared storage area accessible only by the first user and the second user; a shared data generation processing unit for generating a new data file as shared data of the first user and the second user by extracting, according to a shared use condition of data for the second user that is set by the first user, at least some data of at least one data file among one or more data files of the first user, the one or more data files being stored in a dedicated storage area isolated from the second user; and a shared data write processing unit for storing the generated shared data in the shared storage area.

A data sharing system according to one aspect of the present invention includes: a storage including the dedicated storage area and the shared storage area; and the one aspect of the data management device according to the present invention.

A data sharing method according to one aspect of the present invention is a data sharing method for sharing data between a first user and a second user, the method including: by a computer, creating a shared storage area accessible only by the first user and the second user; by a computer, generating a new data file as shared data of the first user and the second user by extracting, according to a shared use condition of data for the second user that is set by the first user, at least some data of at least one data file among one or more data files of the first user, the one or more data files being stored in a dedicated storage area isolated from the second user; and by a computer, storing the generated shared data in the shared storage area.

A data management program according to one aspect of the present invention is a data management program for causing a processor included in the one aspect of the data management device according to the invention to perform processing to be performed by each of the processing units included in the data management device.

### ADVANTAGEOUS EFFECTS OF INVENTION

According to each aspect of the present invention, by automatically creating a shared area that can be accessed only by a first user and a second user to whom the first user wants to disclose data and automatically storing shared data, the data can be shared between the users while satisfying the isolation requirement that only users who use the data can access the data.

### BRIEF DESCRIPTION OF THE DRAWINGS

FIG. 1 is a diagram showing an example of an overall configuration of a data sharing system according to a first embodiment of the present invention.
FIG. 2 is a block diagram showing an example of a hardware configuration of a data management device according to the first embodiment of the present invention.
FIG. 3 is a block diagram showing an example of a software configuration of the data management device.
FIG. 4 is a diagram showing an example of contents of each user condition storage included in a shared use condition storage of the data management device.
FIG. 5 is a diagram showing an example of an area information record for each user shared area included in an area information storage of the data management device.
FIG. 6 is a flowchart showing an example of an overall processing procedure of shared area management processing performed by the data management device.
FIG. 7 is a flowchart showing an example of a processing procedure of shared area creation processing of the overall processing procedure shown in FIG. 6.
FIG. 8 is a flowchart showing an example of a processing procedure of authentication response processing of the overall processing procedure shown in FIG. 6.
FIG. 9 is a diagram showing an example of a storage format of a data file in a user dedicated storage area in a data sharing system according to a second embodiment of the present invention.
FIG. 10 is a flowchart showing an example of a processing procedure of shared area creation processing performed by a data management device according to the second embodiment.

### DETAILED DESCRIPTION

Embodiments of the present invention will be described below with reference to the drawings.

### <First Embodiment>

### (Configuration Example)

### (1) System

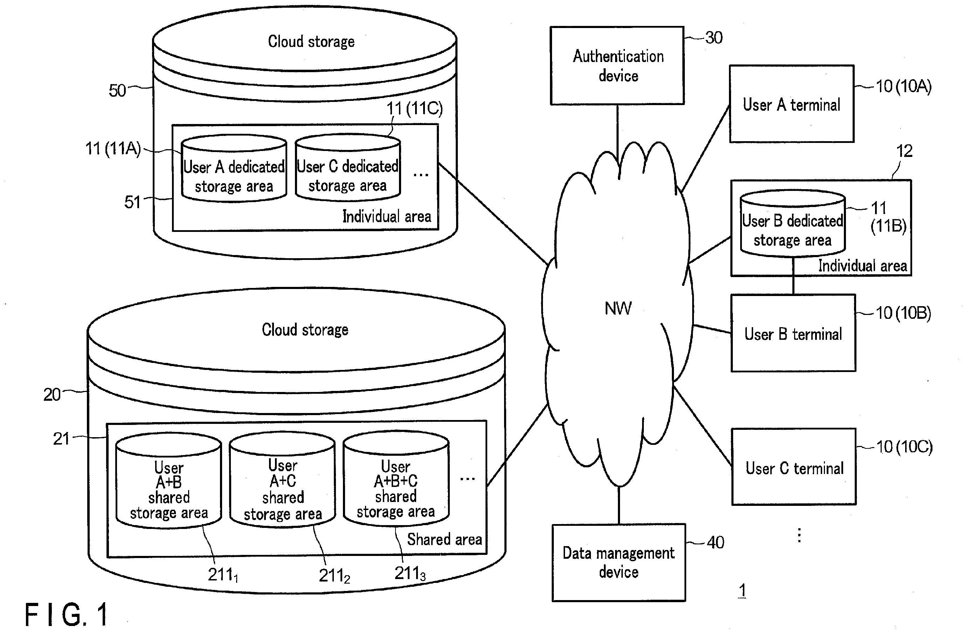

FIG. 1 is a diagram showing an overall configuration of a data sharing system 1 according to a first embodiment of the present invention. The data sharing system 1 provides data sharing among a plurality of users.

The data sharing system 1 includes, for example, a user A terminal 10A, a user B terminal 10B, a user C terminal 10C, etc., a cloud storage 20, an authentication device 30, and a data management device 40 according to the first embodiment of the present invention. If the user A terminal 10A, the user B terminal 10B, the user C terminal 10C, etc. are not particularly distinguished from each other, they are simply referred to as a user terminal 10. The user terminals 10, the cloud storage 20, the authentication device 30, and the data management device 40 are connected to one another via a network NW.

Each user terminal 10 is, for example, a PC located in a different company. FIG. 1 shows one user terminal 10 in one company, but each company may have a plurality of user terminals 10, for example, a plurality of user A terminals 10A. That is, each of the user A terminal 10A, the user B terminal 10B, the user C terminal 10C, etc. may be one terminal or a terminal group including a plurality of terminals.

In addition, the data sharing system 1 may be formed as a system in one company. In this case, each user terminal 10 can be located in each branch office in one company, or can be located in a separate department in one company.

The data sharing system 1 includes, for each user terminal 10, a dedicated storage area isolated from the other user terminals 10. That is, the data sharing system 1 includes a user A dedicated storage area 11A dedicated to the user A terminal 10A, a user B dedicated storage area 11B dedicated to the user B terminal 10B, a user C dedicated storage area 11C dedicated to the user C terminal 10C, etc., each of which stores at least one data file. The dedicated storage area of each user terminal 10 may be provided in a cloud storage or may be provided in an in-house server or the like corresponding to the user terminal 10. In the example of FIG. 1, the user A dedicated storage area 11A, the user C dedicated storage area 11C, etc. are provided in an individual area 51 of a cloud storage 50, and the user B dedicated storage area 11B is provided in an individual area 12 of a user B server (not shown). Here, the individual areas 12 and 51 are storage areas dedicated to the respective user terminals 10 that are connected to the network NW and isolated from the other user terminals 10. The individual area 12 is connected to the user B terminal 10B via an in-house local area network (LAN) or the like. If the user A dedicated storage area 11A, the user B dedicated storage area 11B, the user C dedicated storage area 11C, etc. are not particularly distinguished from each other, they are simply referred to as a user dedicated storage area 11.

The cloud storage 20 is a first storage device including a shared area 21. The shared area 21 is a storage area for storing shared data to be shared among the plurality of user terminals 10. For example, the shared area 21 includes a user A+B shared storage area 211₁ that the user A terminal 10A shares with the user B terminal 10B, a user A+C shared storage area 211₂ that the user A terminal 10A shares with the user C terminal 10C, a user A+B+C shared storage area 211₃ that the user A terminal 10A shares with the user B terminal 10B and the user C terminal 10C, etc. If the user A+B shared storage area 211₁, the user A+C shared storage area 211₂, the user A+B+C shared storage area 211₃, etc. are not particularly distinguished from each other, they are simply referred to as a user shared storage area 211. Each of these user shared storage areas 211 is created for each piece of shared data. Thus, for example, areas shared by the user A terminal 10A with the user B terminal 10B may include a second user A+B shared storage area (not shown) in addition to the user A+B shared storage area 211₁.

Here, the individual area 51 is formed in the cloud storage 50, which is physically different from the cloud storage 20, which is the first storage device including the shared area 21. However, the individual area 51 may be, by being logically separated, formed in the cloud storage 20 in which the shared area 21 is formed. Also, the individual area 12 may be formed in the individual area 51 of the cloud storage 50, or may be formed in the cloud storage 20 by being logically separated.

The authentication device 30 performs user authentication when each user terminal 10 accesses data stored in the individual areas 12 and 51 or the shared area 21, and allows only an authenticated user terminal 10 to access a permitted storage area and data stored therein. In addition, the authentication device 30 restricts the authenticated user terminal 10 to performing only an operation to which an operation authority is given with respect to a permitted user shared storage area 211 of the shared area 21 and shared data stored therein. For example, the authentication device 30 permits the authenticated user terminal 10 to only view the shared data, to edit the shared data, or to store new data created by the authenticated user terminal 10.

In response to a request from any one of the user terminals 10, the data management device 40 creates a shared storage area to be shared with another user terminal 10 in the shared area 21 of the cloud storage 20. For example, in response to a request from the user A terminal 10A, the data management device 40 creates, in the shared area 21 of the cloud storage 20, the user A+B shared storage area 211₁ to be shared with, for example, the user B terminal 10B, which is a data sharing destination set by that user A terminal 10A. Further, the data management device 40 generates shared data in accordance with a data shared use condition for a data sharing destination, e.g., the user B terminal 10B, which is set by a request source, e.g., the user A terminal 10A. For example, the data management device 40 creates a new data file by extracting at least some data of at least one data file among at least one data file stored in, for example, the user A dedicated storage area 11A of the individual area 51 of the cloud storage 50, and generates the new data file as the shared data. Then, the data management device 40 stores the generated shared data in, for example, the user A+B shared storage area 211, created in the shared area 21 of the cloud storage 20.

### (2) Data Management Device 40

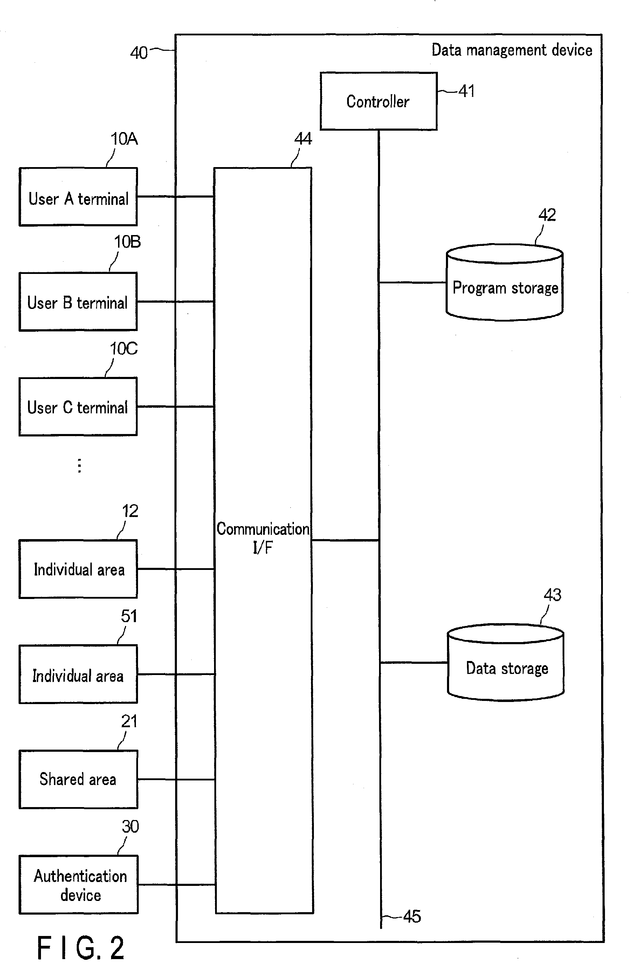

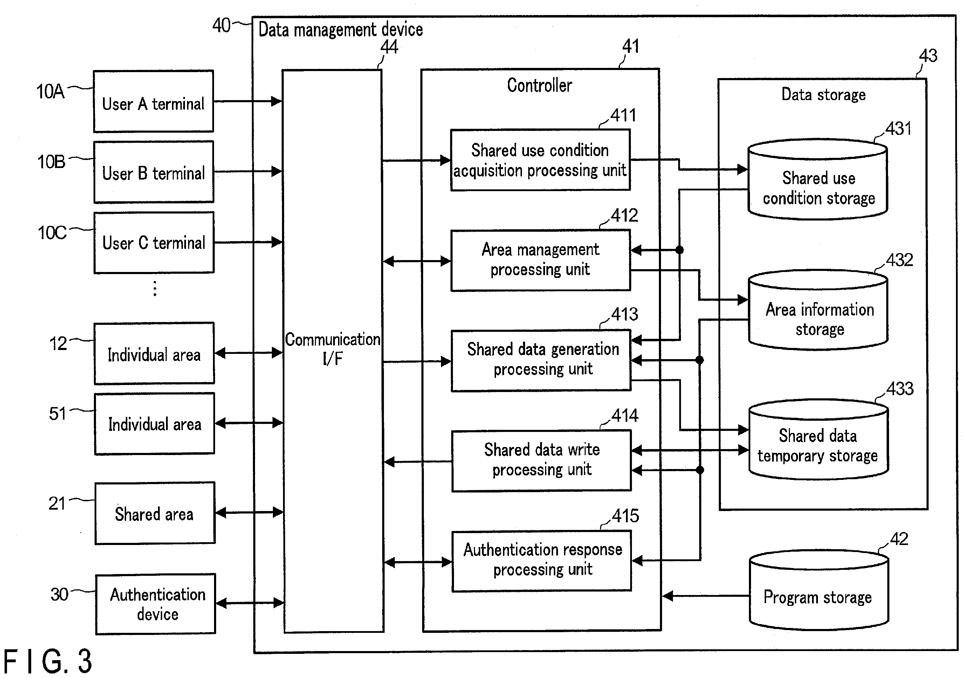

FIGS. 2 and 3 are block diagrams showing examples of a hardware configuration and a software configuration of the data management device 40, respectively.

The data management device 40 includes a controller 41 having a hardware processor such as a central processing unit (CPU), and this controller 41 is connected, via a bus 45, to a storage unit having a program storage 42 and a data storage 43, and to a communication interface (hereinafter, abbreviated as communication I/F) 44.

The communication I/F 44 performs transmission of various data among the user terminals 10, the cloud storage 20, the individual areas 12 and 51, and the authentication device 30 using a communication protocol defined by the network NW under the control of the controller 41.

The program storage 42 is formed by combining, for example, a nonvolatile memory which can be written to and read from whenever required, such as a hard disk drive (HDD) or a solid state drive (SSD) as a storage medium, and a nonvolatile memory such as a read only memory (ROM). This program storage 42 stores middleware such as an operating system (OS), and in addition, programs necessary for performing various control processing according to the first embodiment of the present invention.

The data storage 43 is formed by combining, for example, a nonvolatile memory which can be written to and read from whenever required, such as an HDD or an SSD as a storage medium, and a volatile memory such as a random access memory (RAM). This data storage 43 includes a shared use condition storage 431, an area information storage 432, and a shared data temporary storage 433 as storages necessary for implementing the first embodiment of the present invention.

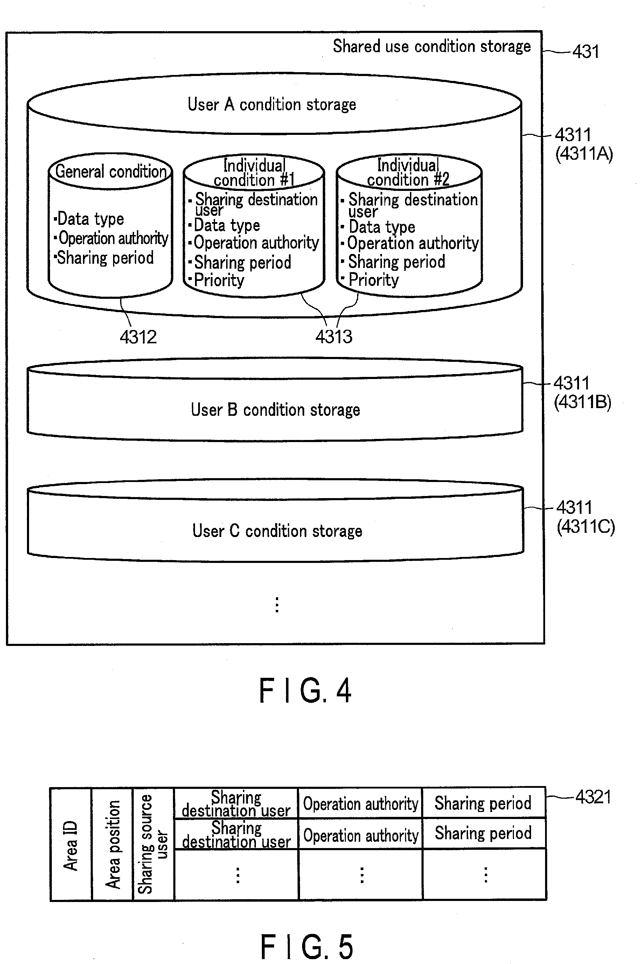

The shared use condition storage 431 includes a user condition storage that stores a data shared use condition set for each user terminal 10. FIG. 4 is a diagram showing an example of contents of each user condition storage included in this shared use condition storage 431. The shared use condition storage 431 stores, as user condition storages for the respective user terminals 10, a user A condition storage 4311A that stores shared use conditions set from the user A terminal 10A, a user B condition storage 4311B that stores shared use conditions set from the user B terminal 10B, a user C condition storage 4311C that stores shared use conditions set from the user C terminal 10C, etc. Since storage contents of the user A condition storage 4311A, the user B condition storage 4311B, the user C condition storage 4311C, etc. are the same, only the user A condition storage 4311A is shown as a representative in FIG. 4. If the user A condition storage 4311A, the user B condition storage 4311B, the user C condition storage 4311C, etc. are not particularly distinguished from each other, they are simply referred to as a user condition storage 4311.

For example, the user A condition storage 4311A includes a general condition storage 4312 that stores general shared use conditions that do not limit the sharing destination user terminal 10, and at least one individual condition storage 4313 that stores individual shared use conditions that limit the sharing destination user terminal 10. The general shared use conditions stored in the general condition storage 4312 include, for example, a data type condition, an operation authority condition, and a sharing period condition.

Here, the data type condition indicates what kind of data is to be extracted as shared data from data files stored in the user A dedicated storage area 11A, which is a dedicated storage area for that user in the individual area 51 of the cloud storage 50. This data type condition can include, for example, an extraction unit condition and a type condition.

As the extraction unit condition, all, some, or the like is set. The extraction unit being all means that all data of one or a plurality of data files, that is, one or a plurality of data files themselves, are used as shared data. The extraction unit being some means that some of the data in one or a plurality of data files, that is, a subset of one or a plurality of data files, is used as shared data. For example, if it is assumed that the data file is of log data of a machine, shared data can be obtained by extracting a log of September 1 in one data file. Alternatively, the shared data can be obtained by collecting logs of September 1 in a plurality of data files and converting the logs into one data file. What kind of data of what kind of data file is to be extracted can be designated by the type condition.

As the type condition, for example, a file type, a keyword, a target machine, or the like is set. The file type includes information that can be acquired by file properties such as a file type (file identifier) depending on a file creation source application, a file name, and a file creation date. A keyword is similarly a word that can be acquired by a file property, such as a word used in a file name. Furthermore, the keyword may be a word included in a data content in a data file. The target machine is a type of keyword such as a machine name or number.

The operation authority condition indicates what kind of authority is given to a sharing destination user terminal 10 as an operation authority of shared data. That is, the operation authority condition may be to permit only viewing of the shared data, to permit editing of the shared data, or to permit saving of new data.

The sharing period condition indicates until when the shared data can be used. This may be to set a certain date in a certain month, or may be to set a period of a certain number of days from a start of sharing.

In addition, the individual condition storage 4313 stores, as an individual shared use condition, a sharing destination user condition for specifying a sharing destination user terminal 10. The sharing destination user condition can include a plurality of sharing destinations as the sharing destination user terminals 10. Furthermore, each individual condition storage 4313 stores, as individual shared use conditions, a data type condition, an operation authority condition, and a sharing period condition specialized for the sharing destination user terminal 10 based on a precontract, etc.

If the individual shared use conditions stored in the individual condition storage 4313 include a condition that conflicts with any one of the general shared use conditions stored in the general condition storage 4312, the individual condition storage 4313 may further store a priority indicating which of the general shared use condition and the individual shared use condition is to be given priority.

Further, the general shared use conditions stored in the general condition storage 4312 and the individual shared use conditions stored in the individual condition storage 4313 may be specified by different users, respectively. For example, if one company has a plurality of user A terminals 10A and one of them is in a management department, the general shared use conditions to be stored in the general condition storage 4312 can be set by the user A terminal 10A in the management department, and the individual shared use conditions to be stored in the individual condition storage 4313 can be set by a user A terminal 10A in a department other than the management department, such as a manufacturing department or a sales department. The individual shared use conditions to be stored in the individual condition storage 4313 can be set in accordance with some regulation such as a disclosure authority indicating a disclosure range of data given to that department or a precontract with a user of a sharing destination user terminal 10.

The area information storage 432 is used to store information on each of the user shared storage areas 211 among the plurality of user terminals 10 created in the shared area 21 of the cloud storage 20, that is, the user A+B shared storage area 211₁, the user A+C shared storage area 211₂, the user A+B+C shared storage area 211₃, etc. FIG. 5 is a diagram showing an example of an area information record 4321 for each user shared area included in this area information storage 432. That is, the area information record 4321 includes each information of an area ID, an area position, a sharing source user, a sharing destination user, an operation authority, and a sharing period.

The area ID is identification information for specifying the user shared storage area 211 of the shared area 21 indicated by that area information record 4321. This may be a uniquely assigned number, a character string recognizable by a person, or a combination of a character string and a number.

The area position is address information for specifying a storage position of that user shared storage area 211 in order to access the user shared storage area 211 via the network NW. This may include an IP address of the cloud storage 20, a physical/logical position such as a drive letter or a folder name of an HDD or an SSD, etc.

The sharing source user is information indicating a user terminal 10 corresponding to a user dedicated storage area 11 in which a data file serving as a base of shared data is stored. This may be identification information uniquely assigned to the user terminal 10, or may be a character string recognizable by a person, e.g., a terminal name such as the user A terminal or a user name such as the user A, or may be a combination of a character string and a number.

The sharing destination user is information indicating a user terminal 10 that uses the shared data. Similarly to the sharing source user, this may be identification information of the user terminal 10, or may be a character string recognizable by a person or a combination of a character string and a number.

The operation authority and the sharing period correspond to the operation authority condition and the sharing period condition stored in the shared use condition storage 431. If the sharing period condition is set as a period of a certain number of days from a start of sharing, the sharing period condition can be converted into an actual date and stored.

The area information record 4321 may include a plurality of sharing destination users, a plurality of operation authorities, and a plurality of sharing periods. For example, in the area information record 4321 for the user A+B shared storage area 211₁, since the sharing destination user is only the user B terminal 10B, one sharing destination user, one operation authority, and one sharing period are included. On the other hand, in the area information record 4321 for the user A+B+C shared storage area 211₃, since there are two sharing destination users, i.e., the user B terminal 10B and the user C terminal 10C, there are also two sharing destination users, two operation authorities, and two sharing periods.

The shared data temporary storage 433 is used to temporarily store shared data to be stored in the user shared storage area 211 among the plurality of user terminals 10 created in the shared area 21 of the cloud storage 20.

The controller 41 includes, as processing functions according to the first embodiment of the present invention, a shared use condition acquisition processing unit 411, an area management processing unit 412, a shared data generation processing unit 413, a shared data write processing unit 414, and an authentication response processing unit 415. These processing units 411 to 415 are all realized by, for example, causing the hardware processor of the controller 41 to execute program stored in the program storage 42.

The shared use condition acquisition processing unit 411 performs a process of receiving, via the communication I/F 44, an instruction to set a shared use condition transmitted from each user terminal 10 and transferred via the network NW. The shared use condition acquisition processing unit 411 further performs a process of storing a shared use condition included in the received instruction to set a shared use condition in a corresponding user condition storage 4311 of the shared use condition storage 431.

The area management processing unit 412 performs a process of receiving, via the communication I/F 44, an instruction to create a shared area that is transmitted from each user terminal 10 and transferred via the network NW. The area management processing unit 412 further performs a process of transmitting an instruction to create a user shared storage area 211 to the cloud storage 20 via the network NW by the communication I/F 44 according to the received creation instruction, thereby creating the user shared storage area 211 among the plurality of user terminals 10 in the shared area 21 of the cloud storage 20. In addition, the area management processing unit 412 performs a process of creating an area information record 4321 in which information on the created user shared storage area 211 is described, and storing it in the area information storage 432. The area management processing unit 412 further performs a process based on a sharing period included in the information on the user shared storage area 211 stored in this area information storage 432. This process includes, for example, a process of deleting the corresponding user shared storage area 211 by transmitting an instruction to delete the user shared storage area 211 to the cloud storage 20 via the network NW by the communication I/F 44 after the sharing period has elapsed.

In accordance with the shared use condition stored in the shared use condition storage 431, the shared data generation processing unit 413 performs a process of reading at least one data file of the sharing source user terminal 10 stored in the individual area 12 or 51 via the network NW by the communication I/F 44. The shared data generation processing unit 413 further performs a process of generating a new data file as shared data by extracting at least some of the data of the read at least one data file in accordance with the shared use condition. Extracting at least some of the data includes extracting the entire data file. That is, the read data file can be shared data. The shared data generation processing unit 413 further performs a process of storing the generated shared data in the shared data temporary storage 433.

The shared data write processing unit 414 performs a process of writing the generated data stored in the shared data temporary storage 433 into the corresponding user shared storage area 211 created in the cloud storage 20 via the network NW by the communication I/F 44 based on the information on the user shared storage area 211 stored in the area information storage 432. After the writing is completed, the shared data write processing unit 414 performs a process of deleting the generated data stored in the shared data temporary storage 433.

The authentication response processing unit 415 performs a process of receiving, via the communication I/F 44, an inquiry about an authenticated user that is transmitted from the authentication device 30 and transferred via the network NW. In response to the received inquiry, the authentication response processing unit 415 further performs a process of determining a user shared storage area 211 of the shared area 21 of the cloud storage 20 accessible by that user terminal 10 and an operation authority given to that user terminal 10 based on the information on the user shared storage area 211 stored in the area information storage 432. Then, the authentication response processing unit 415 performs a process of returning an authentication response indicating the determined user shared storage area 211 and operation authority to the authentication device 30 via the network NW by the communication I/F 44. The operation authority includes any one of permission only to view the shared data in the user shared storage area 211, permission to edit the shared data, and permission to save new data. If the sharing period included in the information on the user shared storage area 211 stored in the area information storage 432 has elapsed, the authentication response processing unit 415 performs a process of returning an authentication response for prohibiting access to that user shared storage area 211 to the authentication device 30 via the network NW by the communication I/F 44.

With respect to the storage of the new data in the user shared storage area 211 of the shared area 21 of the cloud storage 20, no data may be permitted, and the data may be limited to derived data created based on the shared data. The derived data includes, for example, processed data obtained by processing the shared data such as by editing or merging, analysis result data of the shared data, etc. Whether or not the data is derived data can be easily determined by the authentication device 30 if a simple determination criterion such as regularization of data file names is provided. In addition, a data content determination processing unit may be added to the controller 41 of the data management device 40, and the data content determination processing unit may determine whether or not the data is derived data according to a determination criterion based on a data content such as the presence or absence of citation of the shared data in a new data file acquired via the authentication device 30 and a ratio of a degree of matching of a data content. It is desirable to determine in advance by a contract or the like which of the user of the sharing source user terminal 10 and the user of the sharing destination user terminal 10 who has used the shared data has ownership of this derived data.

### (Operation Example)

Next, an operation of the data sharing system 1 having the above configuration will be described.

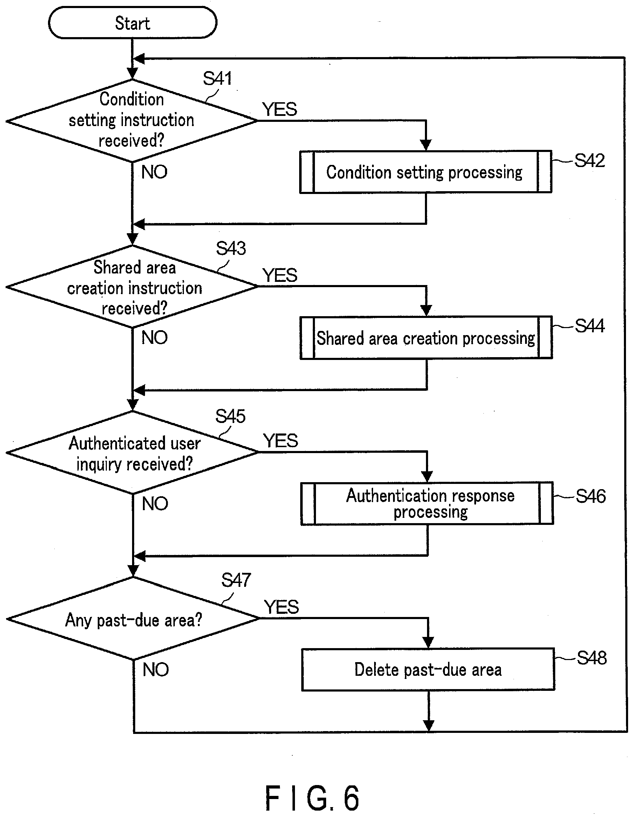

An operation of a file operation such as storing or reading a data file from each user terminal 10 to a corresponding user dedicated storage area 11 is known, and a description thereof will be omitted. Hereinafter, a processing operation of the data management device 40 related to the sharing of the shared data among the plurality of user terminals 10 will be described with reference to flowcharts shown in FIGS. 6 to 8.

First, an overall processing procedure of the data management device 40 will be described. FIG. 6 is a flowchart showing an example of an overall processing procedure of shared area management processing performed by this data management device 40.

In step S41, under the control of the shared use condition acquisition processing unit 411, the controller 41 of the data management device 40 determines whether or not a shared use condition setting instruction transmitted from any one of the user terminals 10 and transferred via the network NW is received via the communication I/F 44. If the shared use condition setting instruction is received, the controller 41 determines YES in step S41 and proceeds to a processing operation in step S42. If the shared use condition setting instruction is not received, the controller 41 determines NO in step S41 and proceeds to a process operation in step S43.

In step S42, under the control of the shared use condition acquisition processing unit 411, the controller 41 performs condition setting processing of storing the shared use condition to be set, which is included in the received shared use condition setting instruction, in the user condition storage 4311 corresponding to the user terminal 10 that is the transmission source. Thereafter, the controller 41 proceeds to a process operation in step S43.

In step S43, under the control of the area management processing unit 412, the controller 41 determines whether or not a shared area creation instruction transmitted from any one of the user terminals 10 and transferred via the network NW is received via the communication I/F 44. If the shared area creation instruction is received, the controller 41 determines YES in step S43 and proceeds to a processing operation in step S44. In addition, if the shared area creation instruction is not received, the controller 41 determines NO in step S43 and proceeds to a process operation in step S45.

In step S44, the controller 41 performs shared area creation processing under the control of the area management processing unit 412, the shared data generation processing unit 413, and the shared data write processing unit 414. This shared area creation processing is a processing operation of creating a shared area, generating shared data, etc. based on the shared use condition stored in the user condition storage 4311 corresponding to the transmission source user terminal 10, and details thereof will be described later. Thereafter, the controller 41 proceeds to a process operation in step S45.

In step S45, under the control of the authentication response processing unit 415, the controller 41 determines whether or not an authenticated user inquiry transmitted from the authentication device 30 and transferred via the network NW is received via the communication I/F 44. If the authenticated user inquiry is received, the controller 41 determines YES in step S45 and proceeds to a processing operation in step S46. If the authenticated user inquiry is not received, the controller 41 determines NO in step S45 and proceeds to a process operation in step S47.

Since the authentication device 30 alone can perform authentication and access control for access to the user dedicated storage area 11 provided in the individual area 12 or 51, no authenticated user inquiry is transmitted from the authentication device 30. Thus, the authenticated user inquiry is transmitted from the authentication device 30 to the data management device 40 only if any one of the user terminals 10 attempts to access any one of the user shared storage areas 211 provided in the shared area 21 of the cloud storage 20.

In step S46, the controller 41 performs authentication response processing under the control of the authentication response processing unit 415. This authentication response processing is a processing operation of returning an authentication response indicating the user shared storage area 211 accessible by the user terminal 10 indicated by the received inquiry and the operation authority given to that user terminal 10 to the authentication device 30 via the network NW by the communication I/F 44 based on the information on the user shared storage area 211 stored in the area information storage 432. Details of the authentication response processing will be described later. Thereafter, the controller 41 proceeds to a process operation in step S47.

In step S47, the controller 41, under the control of the area management processing unit 412, determines whether or not there is a user shared storage area 211 that has exceeded a use period, based on a sharing period in the information on the user shared storage area 211 stored in the area information storage 432. If there is a user shared storage area 211 that has exceeded a use period, the controller 41 determines YES in step S47 and proceeds to a process operation in step S48. If there is no user shared storage area 211 that has exceeded a use period, the controller 41 determines NO in step S47 and proceeds to the process operation in the above step S41.

In step S48, the controller 41 deletes the corresponding user shared storage area 211 from the shared area 21 of the cloud storage 20 under the control of the area management processing unit 412. At this time, the controller 41 copies the shared data edited by the sharing destination user terminal 10 or the new data or derived data created by the sharing destination user terminal 10, which are stored in the corresponding user shared storage area 211, to the user dedicated storage area 11 corresponding to the sharing source user terminal 10, and then deletes the corresponding user shared storage area 211. However, data whose ownership is held by the user of the sharing destination user terminal 10 is not copied. Thereafter, the controller 41 proceeds to the process procedure in the above step S41.

Instead of the operation of deleting the user shared storage area 211 in the above step S48, the controller 41 may perform a process of rewriting the sharing period in the information on the corresponding user shared storage area 211 in the area information storage 432 to a specific value indicating unavailability under the control of the area management processing unit 412. Thus, in the authentication response processing in the above step S46, the controller 41 can return, to the authentication device 30, an authentication response that prohibits access to the user shared storage area 211 in response to the authenticated user inquiry from the user terminal 10 to the user shared storage area 211 that cannot be used, under the control of the authentication response processing unit 415.

### (1) Shared Area Creation Processing

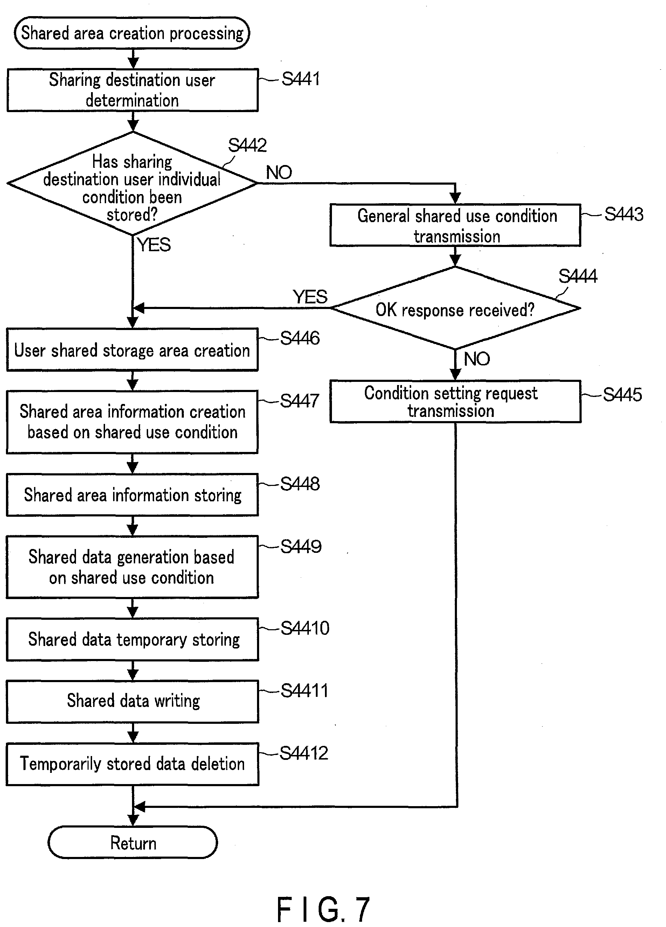

FIG. 7 is a flowchart showing an example of a processing procedure of the shared area creation processing in the above step S44 that is performed by the controller 41 of the data management device 40.

Under the control of the area management processing unit 412, first, in step S441, the controller 41 determines which sharing destination user terminal 10 is designated by the sharing source user terminal 10, which is included in the shared area creation instruction received from the user terminal 10 in the above step S43. There is also a case where a plurality of user terminals 10 are designated as the sharing destination user terminals 10.

In step S442, under the control of the area management processing unit 412, the controller 41 determines whether or not an individual shared use condition for the sharing destination user terminal 10 determined in the above step S441 has been stored. This can be performed by determining whether or not an individual condition storage 4313 related to that sharing destination user terminal 10 exists in the user condition storage 4311 corresponding to the sharing source user terminal 10 in the shared use condition storage 431. If an individual shared use condition for the sharing destination user terminal 10 has already been stored, the controller 41 determines YES in step S442 and proceeds to a process operation in step S446. If an individual shared use condition for the sharing destination user terminal 10 has not been stored, the controller 41 determines NO in step S442 and proceeds to a process operation in step S443.

In step S443, under the control of the area management processing unit 412, the controller 41 transmits a general shared use condition to the sharing source user terminal 10 via the network NW by the communication I/F 44. The controller 41 reads this general shared use condition from a general condition storage 4312 in the user condition storage 4311 corresponding to the sharing source user terminal 10 in the shared use condition storage 431, and transmits the general shared use condition to the sharing source user terminal 10. Thereafter, the controller 41 proceeds to a process operation in step S444.

In step S444, under the control of the area management processing unit 412, the controller 41 determines whether or not an OK response transmitted from the sharing source user terminal 10 and transferred via the network NW is received via the communication I/F 44. If the OK response is received, the controller 41 determines YES in step S444 and proceeds to a process operation in step S446. In addition, if the OK response is not received, the controller 41 determines NO in step S444 and proceeds to a process operation in step S445.

In step S445, under the control of the area management processing unit 412, the controller 41 transmits a condition setting request to the sharing source user terminal 10 via the network NW by the communication I/F 44 so as to set an individual shared use condition for the sharing destination user. Thereafter, the controller 41 ends the processing operation of this shared area creation processing in step S44, and proceeds to the process operation in the above step S45.

In step S446, under the control of the area management processing unit 412, the controller 41 creates a user shared storage area 211, which is a storage area shared between the sharing source user terminal 10 and the sharing destination user terminal 10, in the shared area 21 of the cloud storage 20. This can be performed by the controller 41 transmitting an instruction to create the user shared storage area 211 to the cloud storage 20 via the network NW by the communication I/F 44. Thereafter, the controller 41 proceeds to a process operation in step S447.

In step S447, under the control of the area management processing unit 412, the controller 41 creates shared area information related to the user shared storage area 211 created in the above step S446 based on the individual shared use condition or the general shared use condition. That is, if it is determined in the above step S442 that the individual condition storage 4313 related to the sharing destination user terminal 10 exists, the controller 41 creates shared area information based on the individual shared use condition stored in that individual condition storage 4313. Further, if an OK response indicating that the general shared use condition stored in the general condition storage 4312 is to be used is received from the sharing source user terminal 10 in the above step S444, the controller 41 creates shared area information based on that general shared use condition. Thereafter, the controller 41 proceeds to a process operation in step S448.

When the shared area information is created based on the individual shared use condition in the above step S447, any condition included in that individual shared use condition may conflict with any condition included in the general shared use condition stored in the general condition storage 4312. In such a case, for example, by further storing, as one of the individual shared use conditions stored in the individual condition storage 4313, a priority indicating which of the general shared use condition and the individual shared use condition is to be given a priority, the controller 41 can create the shared area information based on the condition with a higher priority for the conflicting condition.

In step S448, under the control of the area management processing unit 412, the controller 41 stores, as an area information record 4321, the shared area information created in the above step S447 in the area information storage 432. Thereafter, the controller 41 proceeds to a process operation in step S449.

In step S449, under the control of the shared data generation processing unit 413, the controller 41 generates shared data under the individual shared use condition or the general shared use condition. That is, based on the shared use condition, the controller 41 reads at least one data file from the user dedicated storage area 11 of the sharing source user terminal 10 provided in the individual area 12 or 51 via the network NW by the communication I/F 44. Then, the controller 41 further generates a new data file as shared data by extracting at least some of the data of the at least one read data file based on the shared use condition. Thereafter, the controller 41 proceeds to a process operation in step S4410.

In step S4410, the controller 41 temporarily stores the shared data generated in the above step S449 in the shared data temporary storage 433 under the control of the shared data generation processing unit 413. Thereafter, the controller 41 proceeds to a process operation in step S4411.

In step S4411, the controller 41 writes the shared data into a user shared storage area 211 under the control of the shared data write processing unit 414. That is, the controller 41 determines a user shared storage area 211 in the shared area 21 of the cloud storage 20 created in the above step S446, based on the shared area information stored in the area information storage 432 in the above step S448. Then, the controller 41 reads the shared data temporarily stored in the shared data temporary storage 433 in the above step S4410, and writes it into that user shared storage area 211 via the network NW by the communication I/F 44. Thereafter, the controller 41 proceeds to a process operation in step S4412.

In step S4412, under the control of the shared data write processing unit 414, the controller 41 deletes, from the shared data temporary storage 433, the shared data written in the user shared storage area 211 in the above step S4411. Thereafter, the controller 41 ends the processing operation of the shared area creation processing in this step S44, and proceeds to the process operation in the above step S45.

### (2) Authentication Response Processing

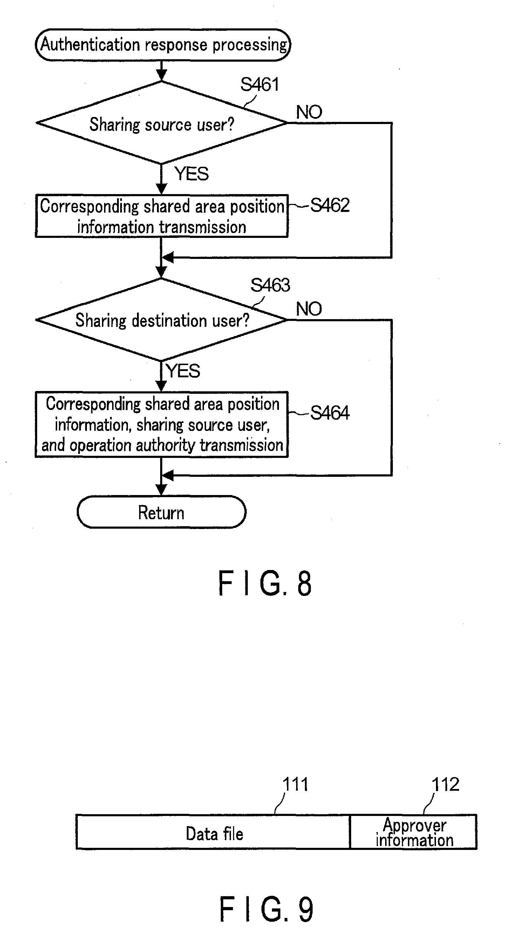

FIG. 8 is a flowchart showing an example of a processing procedure of the authentication response processing in the above step S46 that is performed by the controller 41 of the data management device 40.

Under the control of the authentication response processing unit 415, first, in step S461, the controller 41 determines whether or not the user inquired about in the authenticated user inquiry received in the above step S45 is the sharing source user terminal 10. This can be performed by the controller 41 determining whether or not there is an area information record 4321 in which the user terminal 10 of the inquired-about user is stored as the sharing source user in the area information storage 432. If the inquired-about user is the sharing source user terminal 10, the controller 41 determines YES in step S461 and proceeds to a process operation in step S462. If the inquired-about user is not the sharing source user terminal 10, the controller 41 determines NO in step S461 and proceeds to a process operation in step S463.

In step S462, under the control of the authentication response processing unit 415, the controller 41 transmits position information of a user shared storage area 211 corresponding to the sharing source user terminal 10 among the plurality of user shared storage areas 211 provided in the shared area 21 of the cloud storage 20 to the authentication device 30 via the network NW by the communication I/F 44. That is, the controller 41 reads the position information of the corresponding user shared storage area 211 stored as an area position in the area information record 4321 in which the user terminal 10 of the inquired-about user determined in the above step S461 is stored as the sharing source user, and transmits the position information to the authentication device 30. If there are a plurality of area information records 4321 stored as the sharing source users, position information of the plurality of user shared storage areas 211 is transmitted to the authentication device 30. Since the sharing source user terminal 10 does not impose any access restriction on the corresponding user shared storage area 211, it suffices that the controller 41 transmits only the position information thereof.

In step S463, under the control of the authentication response processing unit 415, the controller 41 determines whether or not the user inquired about in the authenticated user inquiry received in the above step S45 is the sharing destination user terminal 10. This can be performed by the controller 41 determining whether or not there is an area information record 4321 in which the user terminal 10 of the inquired-about user is stored as the sharing destination user in the area information storage 432. If the inquired-about user is the sharing destination user terminal 10, the controller 41 determines YES in step S463 and proceeds to a process operation in step S464. If the inquired-about user is not the sharing destination user terminal 10, the controller 41 determines NO in step S463. In this case, the controller 41 ends the processing operation of the authentication response processing in this step S46, and proceeds to the process operation in the above step S47.

In step S464, under the control of the authentication response processing unit 415, the controller 41 transmits position information of the user shared storage area 211 corresponding to the sharing destination user terminal 10, the sharing source user, and an operation authority to the authentication device 30 via the network NW by the communication I/F 44. That is, the controller 41 reads the position information of the corresponding user shared storage area 211 stored as the area position from the area information record 4321 in which the user terminal 10 of the inquired-about user is stored as the sharing destination user determined in the above step S461. Furthermore, the controller 41 reads, from that area information record 4321, information indicating the sharing source user terminal 10 stored as the sharing source user and the operation authority stored in association with that sharing destination user. Then, the controller 41 transmits the read information to the authentication device 30. If there are a plurality of area information records 4321 stored as the sharing source users, position information, a sharing source user, and an operation authority are read from each of these area information records 4321 and are transmitted to the authentication device 30. Thereafter, the controller 41 ends the processing operation of the authentication response processing in this step S46, and proceeds to the processing operation in the above step S47.

### (Working Effect)

As described above, the data management device 40 according to the first embodiment of the present invention manages data sharing between the user terminal 10 of the first user, for example, the user A terminal 10A, and the user terminal 10 of the second user, for example, at least one of the user B terminal 10B, the user C terminal 10C, etc., and includes the area management processing unit 412, the shared data generation processing unit 413, and the shared data write processing unit 414. Here, the area management processing unit 412 creates a user shared storage area 211 which is a shared storage area accessible only by the user terminal 10 of the first user and the user terminal 10 of the second user. In accordance with a data shared use condition for the user terminal 10 of the second user set by the user terminal 10 of the first user and stored in the shared use condition storage 431, the shared data generation processing unit 413 generates a new data file as shared data of the user terminal 10 of the first user and the user terminal 10 of the second user by extracting at least some of the data of at least one data file among at least one data file of the user terminal 10 of the first user stored in the user dedicated storage area 11 which is a dedicated storage area isolated from the user terminal 10 of the second user. Then, the shared data write processing unit 414 stores the generated shared data in the user shared storage area 211.

Therefore, by automatically creating the user shared storage area 211 which can be accessed only by the user terminal 10 of the first user and the user terminal 10 of the second user to whom the data is to be disclosed and automatically storing the shared data, the data can be shared between the user terminals 10 while satisfying the isolation requirement that only the user terminals 10 using the data can access the data.

The data management device 40 according to the first embodiment further includes an authentication response processing unit 415 that permits, when the user terminal 10 of the second user requests access to the user shared storage area 211, the user terminal 10 of the second user to only view the shared data, edit the shared data, or store the derived data created by the user terminal 10 of the second user based on the shared data according to the shared use condition stored in the shared use condition storage 431.

Thus, the first user terminal 10, which is the sharing source of the shared data, can control the operation authority of the shared data by the user terminal 10 of the second user, which is the sharing destination.

The shared use condition includes a sharing period of the user shared storage area 211, and the area management processing unit 412 deletes that user shared storage area 211 after this sharing period has elapsed. Alternatively, the authentication response processing unit 415 prohibits the user terminal 10 of the second user from accessing the user shared storage area 211 after this sharing period has elapsed.

Thus, the first user terminal 10, which is the sharing source of the shared data, can control the sharing period of the shared data with the user terminal 10 of the second user, which is the sharing destination.

### <Second Embodiment>

Next, a data management device 40 according to a second embodiment of the present invention will be described. In the first embodiment, when creating shared area information based on an individual shared use condition, if there is a conflict between that individual shared use condition and a general shared use condition, which one of the individual shared use condition and the general shared use condition to use is determined based on a priority included in the individual condition. On the other hand, in this second embodiment, an inquiry is made as to which of the individual shared use condition and the general shared use condition is to be used.

Herein, only parts of the configuration example, operation example, and working effect that differ from those of the above first embodiment will be described, and descriptions of similar parts will be omitted.

### (Configuration Example)

In the second embodiment, as an individual shared use condition in an individual condition storage 4313 of a user condition storage 4311 corresponding to each user terminal 10 in the shared condition storage 431, instead of the priority in the first embodiment, an inquiry destination such as an address of a user terminal 10 of an approver who selects which of the individual shared use condition and the general shared use condition is used is stored. That is, an approver is set when the individual shared use condition is set from the user terminal 10.

In a case where the user of the user terminal 10 that sets the individual shared use condition can determine whether or not all original data files stored in the user dedicated storage area 11 used to create shared data can be disclosed, it is only necessary to set the user's own user terminal 10 as the approver terminal, and thus it is easy to perform such setting.

For example, if one company has a plurality of user A terminals 10A and one of them is in a management department, a general shared use condition to be stored in the general condition storage 4312 can be set by the user A terminal 10A in the management department, and an individual shared use condition to be stored in the individual condition storage 4313 can be set by a user A terminal 10A located in a department other than the management department, such as a manufacturing department or a sales department. In such a configuration example, in a case where a user of a user A terminal 10A of one department sets an individual shared use condition to attempt to share a data file stored in a user A dedicated storage area 11A with a user B terminal 10B of another company for one year, if an allowable sharing period is one month in the general shared use condition created by the management department, a conflict occurs between the individual shared use condition and the general shared use condition. Here, if that department or user is authorized to disclose a data file serving as a base of the shared data, the approver may be only the user A terminal 10A of that department.

On the other hand, if a data file that that department or user is not authorized to disclose is included in a data file serving as a base of the shared data, it is necessary to set the user A terminal 10A of a user having a disclosure permission authority as an approver. In accordance with a data type condition in the individual condition, an approver must be set to an individual shared condition for all original data files assumed to be used when shared data is created. For this purpose, it is necessary to grasp all the data files stored in the user A dedicated storage area 11A, which is not practical. Thus, instead of setting the approver in the individual shared condition stored in the individual condition storage 4313, the approver may be associated with the data file stored in the user A dedicated storage area 11A.

FIG. 9 is a diagram showing an example of a storage format of each data file 111 in the user dedicated storage area 11 in the data sharing system 1 according to the second embodiment of the present invention. That is, the data file 111 can be stored in the user dedicated storage area 11 with approver information 112 on the approver of the inquiry destination added thereto.

Instead of storing the data file 111 with the approver information 112 added thereto as shown in FIG. 9, a table in which the data file 111 and the approver are associated with each other may be provided. Alternatively, information indicating the approver may be written in a predetermined area such as a header of the data file 111. In addition, in the present embodiment, a setting method of the approver is not limited at all.

### (Operation Example)

In the second embodiment, details of the shared area creation processing in the above step S441 are different from those in the first embodiment.

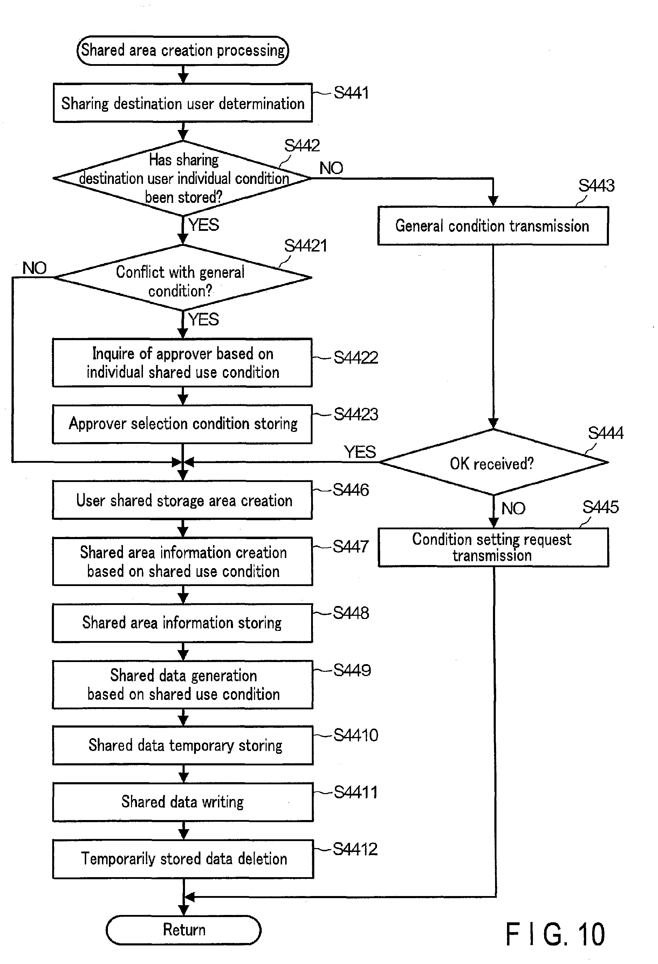

FIG. 10 is a flowchart showing an example of a processing procedure of the shared area creation processing performed by the data management device in the second embodiment. In the present embodiment, the following process operations are added between the process operation in step S442 and the process operation in step S446.

That is, if the individual shared use condition for the sharing destination user terminal 10 has already been stored, the controller 41 determines YES in step S442 and proceeds to a process operation in step S4421.

In step S4421, under the control of the area management processing unit 412, the controller 41 determines whether or not any of the conditions included in the individual shared use conditions for the sharing destination user terminal 10 conflict with any of the conditions included in the general shared use conditions stored in the general condition storage 4312 corresponding to the sharing source user terminal 10. If an individual shared use condition conflicts with a general shared use condition, the controller 41 determines YES in step S4421 and proceeds to a process operation in step S4422. If no individual shared use condition conflicts with a general shared use condition, the controller 41 determines NO in step S4421 and proceeds to the process operation in step S446.

In step S4422, under the control of the area management processing unit 412, the controller 41 inquires of the approver which of the individual shared use condition and the general shared use condition is to be used, based on the individual shared use condition. That is, the controller 41 transmits an inquiry to the user terminal 10 of the approver via the network NW by the communication I/F 44. The controller 41 can determine the approver according to the inquiry destination included in the individual shared use condition. Alternatively, based on the individual shared use condition, the controller 41 can acquire the approver for at least one data file 111 to be used for creating the shared data from the user dedicated storage area 11 of the sharing source user terminal 10 via the network NW by the communication I/F 44. Thereafter, the controller 41 proceeds to a process operation in step S4423.

In step S4423, under the control of the area management processing unit 412, the controller 41 receives, by the communication I/F 44, an approver selection condition, which is an approver selection result transmitted from the user terminal 10 of the approver and transferred via the network NW, and stores the approver selection condition. The storage destination of this approver selection condition is not particularly limited. For example, the storage destination of the approver selection condition may be an internal memory or a register (not shown) of the controller 41, or may be a storage area (not shown) of the data storage 43. Thereafter, the controller 41 proceeds to the process operation in step S446.

In this second embodiment, in the shared use condition used in step S447 and step S449, the approver selection condition stored in the above step S4423 is used for a conflicting condition between the individual shared use conditions and the general shared use conditions.

In the process operation of deleting the temporary stored data in step S4412, the approver selection condition stored in the above step S4423 is also deleted in addition to the shared data temporarily stored in the shared data temporary storage 433.

The process operations in the other steps in the processing procedure of the shared area creation processing are the same as those in the first embodiment, and descriptions thereof will be omitted.

### (Working Effect)

As described above, in the data management device 40 according to the second embodiment of the present invention, the shared use condition includes a general shared use condition that does not limit the user terminal 10 of the second user who is the sharing destination and an individual shared use condition that limits the second user, and if the individual shared use condition conflicts with the general shared use condition, the area management processing unit 412 inquires of a user terminal 10 of an approver about a shared use condition to be used based on the individual shared use condition.

By confirming the approver in this way, it is possible to reduce a possibility of erroneously sharing data that is not originally allowed to be shared.

### <Other Embodiments>

The area management processing unit 412 may transmit the content of the area information storage unit 432 to the authentication device 30 and store the content in the authentication device 30. This eliminates the need for an authenticated user inquiry from the authentication device 30, and thus the data management device 40 does not need to include the authentication response processing unit 415.

In addition, the order of the processing steps shown in the flowcharts of FIGS. 6 to 8 and 10 is an example, and the present invention is not limited to this order. The process order, etc. of each process step may be changed as long as there is no inconsistency with a preceding or subsequent process step.

The embodiments of the present invention have been described in detail, but the explanations described above are only illustration of examples of the present invention in all respects. Various improvement and/or modification are possible as a matter of course without departing from the scope of the present invention. Specifically, any specific structures according to the embodiments may be properly adopted in implementation of the present invention.

In short, the present invention is not limited to the embodiments described above, but can be embodied with various modifications of constituent elements within a range not departing from the gist of the invention. In addition, various inventions can be made by proper combinations of the constituent elements disclosed in the embodiments described above. For example, some constituent elements may be deleted from the constituent elements disclosed in the embodiment. In addition, constituent elements of different embodiments may be properly used in combination.

### <Application Examples>

Several application examples of the present invention will now be described. Application examples are of course not limited to those described below.

### (Company/Group/Organization and Company/Group/Organization)

· A first user as a sharing source of shared data is a factory, and a second user as a sharing destination of the shared data is a maintenance company of machines. Among log data of each machine in a manufacturing line in the factory, data of a specific device is shared. For example, log data of a machine in which a problem such as a failure has occurred before and after the occurrence of the problem, or data of machines disposed before and after that machine in the manufacturing line are shared in a state in which the machines before and after that machine cannot be specified or parameters thereof cannot be specified, thereby assisting a problem solving operation of the machine in which the problem has occurred by the maintenance company.
· A first user as a sharing source of shared data is a factory, and a second user as a sharing destination of the shared data is a manufacturing company of a machine. For example, at the time of requesting design and manufacture of a new machine, design specification data, etc. is shared in a state in which the manufacturing line cannot be specified, thereby assisting the design and manufacture of the manufacturing company.
· A first user as a sharing source of shared data is a hospital, and a second user as a sharing destination of the shared data is a pharmaceutical company. Data collected in the hospital is shared with the pharmaceutical company and utilized for development of a new drug. For example, symptom change data by medication for a discretionary disease is shared with the pharmaceutical company.
· A first user as a sharing source of shared data is a government office or a local public entity, and a second user as a sharing destination of the shared data is a company. Special data, for example, data of an image of a flow of persons, which the public office or local public entity has, is shared with the company to be used for marketing, etc.
· A first user as a sharing source of shared data is a company, and a second user as a sharing destination of the shared data is a local police station. Data limited to an area, from data collected from a connected car by an automobile company, is shared with the local police station, and is used for, for example, signal control, etc. based on a traffic volume for each time.
· A first user as a sharing source of shared data is a school, and a second user as a sharing destination of the shared data is a board of education. From personal information of each student owned by the school, residence area data at a city/town/village level, IT equipment data owned by a student to be used for a remote class, etc. are shared to be used for subsidies and lending of IT equipment to the school and the students.
· A first user as a sharing source of shared data is an organization in a company, and a second user as a sharing destination of the shared data is another organization in the company. For example, only data necessary for manufacturing a specific product among design data of a design department is shared with a manufacturing department.

### (Individual and Company/Group/Organization)

- A first user as a sharing source of shared data is a patient, and a second user as a sharing destination of the shared data is a hospital. Health data, which is difficult for the hospital to hold from the viewpoint of personal information protection, is shared only when analyzing a symptom of the patient.
- A first user as a sharing source of shared data is a consumer, and a second user as a sharing destination of the shared data is a product manufacturing company. By sharing only purchase data of a specific product related to a product manufacturing company among purchase data of real stores or mail-order sales of consumers, it is possible to use the purchase data for development of a new product in the company or to introduce stores from the company to consumers.
- A first user as a sharing source of shared data is a recruitment applicant, and a second user as a sharing destination of the shared data is a company. From among personal information, the recruitment applicant shares data requested by the company for recruitment.

### (Company/Group/Organization and Individual)

- A first user as a sharing source of shared data is a school, and a second user as a sharing destination of the shared data is a student or a guardian. From among result data and attendance data of all students, data of each student is shared.
- A first user as a sharing source of shared data is a company, and a second user as a sharing destination of the shared data is an employee. From among salary information, work information, personnel examination information, etc., of each employee owned by the company, data which can be disclosed to each employee is shared.
- A first user as a sharing source of shared data is a company, and a second user as a sharing destination of the shared data is a recruitment applicant or a prospective employee. From among salary information, work information, etc. of employees owned by the company, data such as post-employment benefits is shared according to a level of participation of the recruitment applicant or prospective employee in the company.

### (Individual and Individual)

- A first user as a sharing source of shared data is an owner of a building, and a second user as a sharing destination of the shared data is a tenant. From among contract data and rent reception ledger data of all tenants owned by the owner of the building, data of each tenant is shared with that tenant.

### REFERENCE SIGNS LIST

1...Data sharing system
10...User terminal
10A...User A terminal
10B...User B terminal
10C...User C terminal
11...User dedicated storage area
11A...User A dedicated storage are
11B...User B dedicated storage area
11C...User C dedicated storage area
111...Data file
112...Approver information
12... Individual area
12, 51...Individual area
20...Cloud storage
21...Shared area
211...User shared storage area
211₁...User A+B shared storage area
211₂...User A+C shared storage area
211₃...User A+B+C shared storage area
30...Authentication device
40...Data management device
41...Controller
411...Shared use condition acquisition processing unit
412...Area management processing unit
413...Shared data generation processing unit
414...Shared data write processing unit
415...Authentication response processing unit
42...Program storage
43...Data storage
431...Shared use condition storage
4311...User condition storage
4311A...User A condition storage
4311B...User B condition storage
4311C...User C condition storage
4312...General condition
4313...Individual condition
432...Area information storage
4321...Area information record
433...Shared data temporary storage
44...Communication I/F
45...Bus
50...Cloud storage
NW...network

## Claims

1. A data management device for managing data sharing between a first user and a second user, the device comprising:
an area management processing unit for creating a shared storage area accessible only by the first user and the second user;
a shared data generation processing unit for generating a new data file as shared data of the first user and the second user by extracting, according to a shared use condition of data for the second user that is set by the first user, at least some data of at least one data file among one or more data files of the first user, said one or more data files being stored in a dedicated storage area isolated from the second user; and
a shared data write processing unit for storing the generated shared data in the shared storage area.

2. The data management device according to claim 1, further comprising an authentication response processing unit for, when the second user requests access to the shared storage area, permitting the second user to any one of only view the shared data, edit the shared data, and save derived data created by the second user based on the shared data, according to the shared use condition.

3. The data management device according to claim 2, wherein the shared use condition includes a sharing period of the shared storage area, and
after the sharing period elapses,
the area management processing unit deletes the shared storage area, or
the authentication response processing unit prohibits the second user from accessing the shared storage area.

4. The data management device according to claim 1, wherein
the shared use condition includes a general shared use condition in which the second user is not limited and an individual shared use condition in which the second user is limited, and
if the individual shared use condition conflicts with the general shared use condition, the area management processing unit inquires of an approver about a shared use condition to be used based on the individual shared use condition.

5. A data sharing system comprising:
a storage including the dedicated storage area and the shared storage area; and
the data management device according to any one of claims 1 to 4.

6. The data sharing system according to claim 5, wherein the storage includes a first storage device including the dedicated storage area and a second storage device in which the shared storage area is created, the second storage device being physically different from the first storage device.

7. A data sharing method for sharing data between a first user and a second user, the method comprising the steps of:
by a computer, creating a shared storage area accessible only by the first user and the second user;
by the computer, generating a new data file as shared data of the first user and the second user by extracting, according to a shared use condition of data for the second user that is set by the first user, at least some data of at least one data file among one or more data files of the first user, said one or more data files being stored in a dedicated storage area isolated from the second user; and
by the computer, storing the generated shared data in the shared storage area.

8. A data management program for causing a processor included in the data management device according to any one of claims 1 to 4 to perform processing to be performed by each of the processing units included in the data management device.
